# EUROPEAN PATENT APPLICATION

(11) **EP 0 653 389 A1**
(43) Date of publication of application: **17.05.1995**
(21) Application number: 94909358.7
(22) Date of filing: 24.02.1994
(51) Int. Cl.: C04B 18/04, C04B 18/14, C04B 28/02

(54) **PROCESS FOR PRODUCING ARTIFICIAL STONE BUILDING BLOCKS**

(30) Priority: 26.05.1993 RU 93028515
(71) Applicant: Nauchno-proizvodstvennoe Obiedinenie "Regenerator", Moscow, 123557 (RU); AKTSIONERNOE OBSCHESTVO KAMAZ, Naberezhnye Chelny, 423810 (RU)
(72) Inventor: SHPEKTOR, Anatoly Alexandrovich, Moscow, 121069 (RU); YAKOBSON, Anatoly Iosifovich, Naberezhnye Chelny, 423810 (RU); SKORNYAKOV, Vladimir Nikolaevich, Moscow, 117602 (RU); ZAYAKIN, Sergei Nikolaevich, Naberezhnye Chelny, 423823 (RU); KNORRE, Igor Nikolaevich, Moscow, 117420 (RU); ZADOV, Alexandr Efimovich, Moscow, 135502 (RU); LEDKOV, Jury Alexandrovich, Naberezhnye Chelny, 423821 (RU)
(74) Representative: W.P. Thompson & Co.
(86) International application number: RU9400033
(87) International publication number: WO9427925

(57) **Abstract**

A process is disclosed whereby a sandy-argillaceous base material, for which waste moulding material is used, undergoes magnetic separation, crushing and sifting, the undersize product being removed and heat cured in an oxidizing environment at a predetermined temperature. The undersize and oversize products are then mixed with a binding agent and water in predetermined proportions to produce a raw mixture from which the artificial stone building blocks are formed by pressing followed by hardening.

## Description

### Technical Field

The present invention relates in general to methods for producing building materials and more specifically it concerns a method for producing artificial stone construction elements.

### Background Art

At present both reclaiming toxic waste of foundry practice and producing cheap building materials become more and more important.

According to the generally adopted technological foundry practice used up moulding sand are usually dumped and are not thus utilized afterwards This, however, involves considerable transport expenditures, provision of specially allotted areas, as well as deteriorates environmental situation due to the fact that used up moulding sand contains toxic substances, organic ones inclusive.

That is why producing ecologically safe construction elements from foundry waste products, namely, those based on used up moulding sand, directly in the zone of foundry production itself may sulve the problem of utilization of foundry waste and add to the efficiency of foundry practice as a whole.

One prior-art method for producing artificial stone construction elements (cf. advertising booklets of the firm 'CITADOB- ES', Belgium, 1989 "Production process of compressed-soil blocks of the "Adobe" and "Geoconcrete" types), is known to consist in that a sand-clay base is heated, kept at a preset temperature, crushed, and screened, whereupon the undersize product is mixed, in a preset ratio, with gravel, a binder, and water to produce a stock mix, wherefrom artificial stone construction elements are press-moulded and after-cured.

According to the known method, used as a sand-clay base is natural soil containing sand, clay, organic inclusions, and gravel. First of all such a soil is dried to remove an excess amount of moisture, then crushed and screened.

Then the oversize product is then picked up and made no use of subsequently. The undersize product is mixed, in preset proportions, with water, a binder in the capacity of which cement is used, and gravel until a stock mix is obtained, wherefrom artificial stone construction elements are press-moulded. The thus-produced construction elements are air-cured under outdoor conditions at the ambient temperature.

Artificial stone construction elements produced by the known method are intended for use in arid climate zones only, and cannot be used under any other climate conditions unless they are provided with special coatings, this being due to natural swelling of the materials used in such construction elements in the presence of water.

This in turn results in destruction of buildings made from such arfifical stone construction elements.

Furthermore it is noteworthy that the known method is limited as for the nature of the sand-clay base used, otherwise speaking, the natural soil should be free from any toxic substances. If otherwise the toxic substances present in said sand-clay base will not be eliminated therefrom during heating (drying) when using the known technology, which affects adversely the quality of the finished product and even may render it unfit for use in some instances.

### Disclosure of the Invention

It is a principal object of the present invention to provide a method for making artificial stone construction elements, wherein a possibility is provided for producing ecologically safe artificial stone construction elements from a toxic material capable of swelling in the presence of moisture, used as a sand-clay base, the resultant construction elements being suitable for use virtually in every climate zone and featuring low cost. The foregoing object is accomplished due to the fact that in a method for making artificial stone construction elements, consisting in that a sand-clay base is heated, kept at a preset temperature, crushed, and screened, while the undersize product is mixed, in a preset ratio, with gravel, a binder, and water until a stock mix is obtained, wherefrom artificial stone construction elements are made by press-moulding followed by curing, according to the invention, used as sand-clay base is used up moulding sand, containing bentonite as clayey component and having inclusions in the form of metal scrap, mould cores, and organic substances, at least part of these being toxic, use of said used up moulding sand being preceded by magnetic separation thereof to remove metal scrap therefrom, and crushing and screening of said moulding sand is carried out preparatory to heating; the oversize material is separated and used as gravel; heating and holding at a preset temperature under conditions of oxidizing roasting up to such a temperature and within such a period of time that provide for elemination of toxic organic substances therefrom.

It is expedient that the components for preparing the stock mix be taken in the folllowing ration (wt.%):

| undersize product of used | |
|---|---|
| moulding sand | 45 - 94.9 |
| cement | 5 - 35 |

| oversize product of used | |
|---|---|
| moulding sand | 0.1 - 20.0 |
| water | 2 - 10 |
| of the weight of dry stock mix. | |

It is reasonable that in cases where the bentonite content of used up moulding sand is below 0.2 wt.%, bentonite is added, when preparing the stock mix, in an amount of 0.1 - 2 wt.% of the weight of dry stock mix. It is economically advantageous that the curing process be carried out by way of heat-and-wet treatment. It is important that the process of oxidizing roasting be carried out at 200 - - 350°C for 15 - 90 min. It is expedient for attaining a required density of a construction element that the stock mix be compressed with apressing force of 2500 - 6300 kN.

It is likewise advantageous that the stock mix be disintegrated and homogenized before compressing in order to ensure against lumping due to the presence of bentonite therein. It is yes that the stock mix after having been prepared, be subjected to an additional magnetic separation. The proposed method for making artificial stone construction elements from a toxic used up moulding sand is instrumental in producing ecologically safe construction elements having high and stable strength characteristics. Thanks to a complex combination of technological procedures and conditions of such procedures there is completely ruled out such a negative feature of a building material as swelling in the presence of moisture which renders building structures made up of the elements produced according to the proposed method, suitable for use under any climate conditions. The herein-proposed technological processes for production of building materials make it possible to reclaim foundry waste products, which reduces considerably environmental pollution and at the same time adds to the efficiency of foundry practice itself. The commonly used process equipment is used for practical implementation of the proposed method, said equipment being conveniently adaptable to the main technological cycle of foundry production process.

### Brief Description of the Drawings

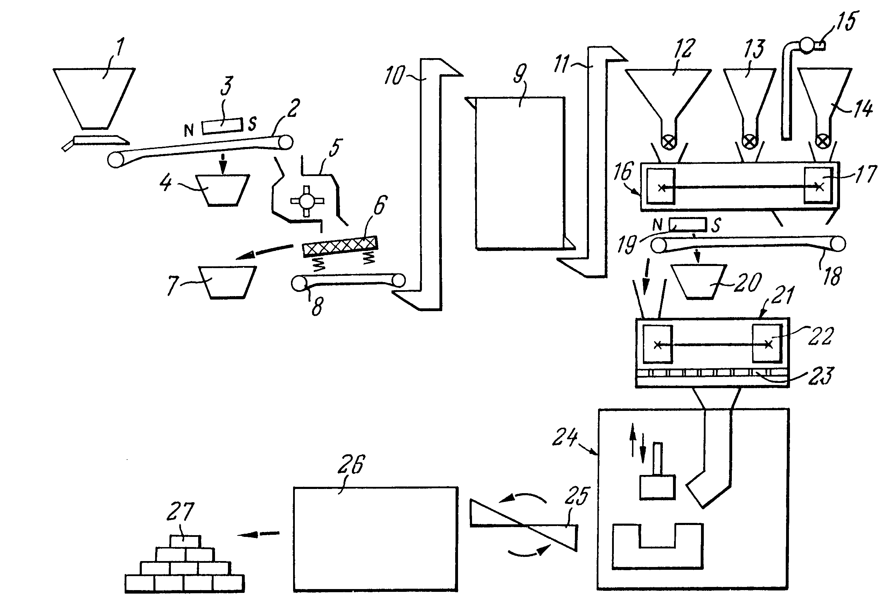

In what follows the present invention is illustrated in a detailed description of a specific embodiment thereof given by way of example with reference to the accompanying drawing, wherein a unit for producing artificial stone construction elements is schematically represented.

### Best Method of Carrying Out the Invention

The proposed method for making artificial stone construction elements can be carried into effect on one of the technological production units a specific embodiment of which is presented in the present description.

The unit comprises a hopper 1 with a feeder, wherein the sand-clay base is located, which is in a given particular case of the proposed method a used up moulding sand which comprises bentonite as the main clayey component, and has inclusions of metal scrap, mould cores, and organic substances, at least part of them being toxic ones.

Used as the sand component of said base is silicon dioxide whose particles are coated by thermally activated clay of the chamotted and active type.

It is noteworthy that said thermally activated clay located on the surface of the silicon dioxide particles is capable of stimulating the formation of new structures in the construction element being cured, which equalizes the curing rates over the entire volume of the product, the active clay adding to the green strength thereof, while the chamotted one promotes its hardening. Use of the screening oversize as the gravel component makes it possible to completely reclaim rejected core sand which is available in great amounts at foundries.

A conveyer 2 is provided under the hopper 1, and a magnetic separator 3 is located near said conveyer, said separator being adapted for eliminating metal scrap that is collected in a container 4 located beneath the conveyer 2.

Located past the magnetic separator 3 as along the process flowsheet is a crusher 5, then a sizing screen 6. The oversize product of screening is directed to a bin 7, and the undersize product, to a conveyter 8. Further on a roaster 9 is located, provided with elewators 10, 11 aimed at feeding the undersize product to the roaster 9 and discharging said product therefrom. The unit is also provided with weigh hoppers 12, 13, 14, intended respectively for collecting and batching the undersize produckt, oversize product, and the binder, in the capacity of which cement is used. The weigh hoppers 12, 13, 14, and a water piping 15 are situated underneath a mixing chamber 16 provided with mills 17. Located under the mixing chamber 16 is a conveyer 18 above which is situated a magnetic separator 19, and below which, a container 20 for collecting metallic inclusion removed from the used up moulding sand during crushing.

Located further along the process flowsheet is a disintegrator-homogenizer 21 provided with rolls 22 and having a perforated bottom 23, a press 24 being provided past said disintegrator-homogenizer, said press having a mechanically actuated punch.

A piler 25 of the finished construction elements is located past the press 24 before a steam chamber 26, wherefrom the artificial stone construction elements are forwarded to a storage yard 27 of finished products.

The herein-proposed method for making artificial stone construction elements is as follows.

Used up moulding sand is fed, through the hopper 1 with the feeder, to the conveyer 2. While being conveyed the mixture is get rid of metal scrap contained therein, said scrap being then collected in the bin 4. The thus-prepared mix then gets in the hammer crusher 5, wherein the mix, containing mould cores, lumps, and other large-size fractions is disintegrated. Thereafter the mix is fed to the vibrating screen 6 to get separated into a small-size fraction (the undersize product), and a large-size fraction (the oversize product). Then the oversize product is collecteed in the bin 7, while the undersize product is fed, along the conveyer 8 and the elevator 10, to the roaster 9.

It is in the roaster 9 that the organic substances contained in the used up moulding sand are oxidized, evaporated, and thermally destructed.

Simultaneously the stock mix is stabilized as for its moisture content.

The mix is heated to a preset temperature and held at said temperature under conditions of oxidizing roasting, the beat parameters of which are as follows: heating up to 200 - 350°C and holding at that temperature for 15 - 90 min. In a general case, a lower heating temperature requires a longer holding time, and vice versa.

The aforespecified temperature range provides for both retaining an active kind of chamotted clay and removal of toxic substances from the used up moulding sand.

Heating up to a temperature above 350°C is economically inexpedient, whereas that below 200°C is inadequate because in this case such toxic substances as phenolic and furane resins get decomposed but incompletely.

After the roaster 9 the mix gets onto the elevator 11, where it is cooled down to a preset temperature. From the elevator 11 the mix is fed into he weigh hopper 12.

The oversize product is conveyed from the bin 7 to the corresponding weigh hopper 13 by an appropriate conveyer omitted in the Drawing. The binder (cement) or bentonite is fed to the weigh hoppers 14 (of which only one is shown in the Drawing purposely).

The dry original components of the stock mix are fed to the mixing chamber 16 in the following ratio (wt.%):

| undersize product of used | |
|---|---|
| moulding sand | 45 - 94.9 |
| cement | 5 - 35 |

| oversize product of used | |
|---|---|
| moulding sand | 0.1 - 20.0 |

The aforesaid ratio of the stock mix components are found proceeding from experimental data on pressibility of construction elements and their performance characteristics.

The cement content of the mix is established depending on the bentonite content of the used up moulding sand, the required degree of strength and frost resistance of the construction elements being produced. For instance, with the 4 - 6 wt.% content of bentonite in the used up moulding sand, it is expedient to use 15 - 25 wt.% of cement. With a lower bentonite content it is required 5 - 10 wt..% of cement, a more accurate percentage content of which is determined by the requirements imposed upon the construction elements being produced. The ratio between the oversize and the undersize products in the stock mix is set proceeding from the water-content of the prepared stock mix, which content is selected to be within 2 and 10 wt.%. of the weight of dry mix.

The ratio between water and the oversize product is selected depending on the curing technique, the oversize/undersize product balance, and the bentonite content of the original stock mix (used up moulding sand).

For example, for natural curing condition in the summertime, the following ratio may be recommended: 6 - 10% of water and 20% of the oversize product; when the mix is cured in the steam chamber 26 use is made of 5 - 6% of water and 5 - 10% of the oversize product.

While in the mixing chamber 16 the stock mix is homogenized and moistened, and is then fed to the conveyer 18, wherefrom metal scrap and chance metal objects accumulated in the container 20, that have released from the mix during the crushing process, are removed by the magnetic separator 19.

Use of used up moulding sand determines the preferred application of the foundry-type mixing chamber 16, specifically, the mills 17, rather than a mixing chamber conventionally made use of in production of building materials.

The finished bentonite-containing stock mix is loosened and ground with the mills 22 of the disintegrator-homogenizer 21 through its perforated bottom 23 in order to increase the degree of homogeniety of the stock mix during pressing as well as the stability of the physico-mechanical properties of construction elements, and to improve the working conditions of the pressing process.

However, in some instances with a low bentonite and metal scrap content of the original used up moulding mix, said mix may be fed after the mixing chamber 16 immediately to the receiving hopper of the press 24. It is in the press 24 that construction elements are pressed at a pressing force of 2500 - 6300 kN. Such apressure range has been established experimentally in testing diverse types of the sand base whose peculiarity stems from specific conditions of various foundries, in particular, weighing of castings, casting yield, the nature of binders, and morphhology of silicon dioxide.

As a result, there are attained the required performance characteristics, that is, configuration of a construction element, strength, porosity, weight, and others. With pressing forces below 2500 kN the aforesaid characteristics fail to acquire the preset values, and with pressing forces above 6300 kN an overpressing phenomenon may occur.

Thereupon the finished construction elements are stockpiled either manually or with the aid of the piler 25, and are forwarded either to the storage yard 27 or to the steam chamber 26. In both cases the pressing process is followed by the curing of the finished elements, which proceeds in the former case under natural conditions (which occupies much time), and in the latter case, by heat-and-wet treatment that curtails the time of the curing process. The curing parameters of construction elements, that is, temperature, moisture content, and duration of the process are also dependent on specific conditions of the foundries because the properties of the principal components of the stock mix, i.e., sand base and gravel, differ widely, which may require speeding up of the curing process

Thus the method proposed in the present invention makes it possible to produce, immediately under conditions of foundry practice, artificial stone construction elements from toxic used up moulking sand, said elements being resistant to swelling in the presence of moisture and big therefore operable under any climate conditions within a prolonged period of time.

To promote understanding of the advantages of the present invention, given below are some specific examples of its practical implementation.

### Example 1

To prepare a stock mix, the dry components thereof are taken in the following weight percentage ratio:

| | |
|---|---|
| oversize product | 20 |
| cement | 20 |
| undersize product | 60 |
| water | 6 |
| (of the weight of dry components). | |

The bentonite content of the used up moulding sand equals 4 wt.%. The oxidizing roasting process is carried out at a heating temperature of 350°C for 90 min. The pressing force during the moulding process is 6300 kN, the curing process occurring under natural (outdoor) conditions.

Compression strength of the finished construction element is 150 kgf /cm², its frost resistance being 50 cycles.

### Example 2

The dry components of the mix are taken in the following weight percentage ratio:

| | |
|---|---|
| oversize product | 0.1 |
| cement | 20 |
| undersize product | 79.9 |
| water | 3 |
| (of the weight of dry components). | |

The bentonite content of the used up moulking sand is 0.2 wt.%, 2 wt.% of bentonite being added to the dry stock mix.

Oidizing roasting is performed with the following parameters;

| | |
|---|---|
| heating temperature | 200°C |
| holding time | 15 min. |

Pressing is effected with a force of 6300 kN. Curing is performed under heat-and-wet treatment conditions.

| | |
|---|---|
| Compression strength | 100 kg/cm². |
| Frost resistance | 15 cycles. |

### Example 3

The dry components of the mix are taken in the following weight percentage ratio:

| | |
|---|---|
| oversize product | 20 |
| cement | 10 |
| undersize product | 70 |
| water | 5 |
| (of the weight of dry components). | |

The bentonite content of the used up moulding sand is 0.3 wt.%. Oxidizing roasting is effected with the following parameters:

| | |
|---|---|
| heating temperature | 300°C |
| holding time | 90 min. |

The pressing force is 4000 kN.

Curing is carried out under heat-and-wet treatment conditions.

Compression strength of the finished construction element is 75 kgf /cm², frost resistance being 15 cycles. It is quite evident from the Examples stated above that all construction elements produced according to the proposed method, notwithstanding the differences in the raw stock composition and parameters of technological processes, meet the preset requirements as to strength and frost resistance characteristics and may be successfully used for building structures in vertually any climate zones.

### Industrial Applicability

The present invention can find application for reclaiming foundry waste products.

## Claims

1. A method for making artificial stone construction elements, consisting in that a sand-clay base is heated, kept at a preset temperature, crushed, and screened, while the undersize product is mixed, in a preset ratio, with gravel, a binder, and water until a stock mix isobtained, wherefrom artificial stone construction elements are made by press-moulding followed by curing, CHARACTERIZED in that used as said-clay base is a used up moulding sand, containing bentonite as a clayey component and having inclusions in the form of metal scrap, mould cores, and organic substances, at least part of these being toxic, use of said used up moulding sand being preceded by magnetic separation thereof to remove metal scrap therefrom, and crushing and screening of said moulding sand is carried out preparatory to heating; the oversize material is separated and used as gravel; heating and holding at a preset temperature under conditions of oxidizing roasting up to such a temperature and within such a period of time that provide for elimination of toxic substances therefrom.

2. A method according to Claim 1, CHARACTERIZED in that the components for preparing the stock mix are taken in the following ratio (wt.%):
| undersize product of used | |
|---|---|
| moulding sand | 45 - 94.9 |
| cement | 5 - 35 |
| oversize product of used | |
|---|---|
| moulding sand | 0.1 - 20.0 |
| water | 2 - 10 |
| of the weight of dry stock mix. | |

3. A method according to Claim 2, CHARACTERIZED in that in cases where the bentonite content of used up moulding sand is below 0.2 wt.%, bentonite is added, when preparing the stock mix, in an amount of 0.1 - 2 wt.% of the weight of dry stock mix.

4. A method according to any one of Claims 1 to 3, CHARACTERIZED in that the curing process is carried out by way of heat-and-wet treatment.

5. A method according to any one of Claims 1 to 3, CHARACTERIZED in that the process of oxidizing roasting is carried out at 200 - 350°C for 15 - 90 min.

6. A method according to Claim 4, CHARACTERIZED in that the process of oxidizing roasting is carried out at 200 - 350°C for 15 - 90 min.

7. A method according to Claim 1, or 2, or 3, or 6, CHARACTERIZED in that the stock mix is compressed with a pressing force of 2500 - 6300 kN.

8. A method according to Claim 1, or 2, or 3, or 6, CHARACTERIZED in that the stock mix is disintegrated and homogenized before compressing in order to ensure against lumping due to the presence of bentonite therein.

9. A method according to Claim 7, CHARACTERIZED in that the stock mix is disintegrated and homogenized before compressing in order to ensure against lumping due to the presence of bentonite therein.

10. A method according to Claim 1, or 2, or 3, or 6, or 9, CHARACTERIZED in that the stock mix after having been prepared be subjected to an additional magnetic separation.
